# EUROPEAN PATENT SPECIFICATION

(11) **EP 1 176 446 B1**
(45) Date of publication and mention of the grant of the patent: **26.07.2006**
(21) Application number: 01500164.7
(22) Date of filing: 29.06.2001
(51) Int. Cl.: G02B 6/44

(54) **Optic fibre separator**
Glasfasertrenner
Séparateur de fibres optiques

(30) Priority: 26.07.2000 ES 200001996
(43) Date of publication of application: 30.01.2002
(73) Proprietor: Telefonica, S.A., 28013 Madrid (ES)
(72) Inventor: Diaz Cortijo, D. Jesus TELEFONICA, S.A., 28020 Madrid (ES)
(74) Representative: Sanchez del Campo Gonzalez de Ubierna, Ramon

(56) References cited:
- EP-A- 0 582 744
- DE-A- 3 833 492
- DE-A- 4 405 459
- DE-U- 29 923 007
- GB-A- 2 277 206
- US-A- 4 697 873
- US-A- 5 048 918

## Description

### BACKGROUND OF THE INVENTION

This descriptive report refers to a Utility Model application regarding an optic fibre separator, the obvious purpose of which is to distribute and protect the individual fibres comprising the cable, when it is necessary to perform some type of handling thereof, like, for example, accessing the splicing trays of the splicing boxes and optic fibre distributors in a separate manner, achieving thanks to the separator, the necessary mechanical protection.

This invention is applicable to the telecommunications industry and more specifically, in optic fibre cable installations.

US4697873 describes a fan-out device for an optical cable having a cylindrical body of plastic material closed on one end and open on the other for the insertion of an optical fiber cable. On the closed end, studs may be present for protecting the protruding individual fibers.

### SUMMARY OF THE INVENTION

The optic fibre separator proposed by the invention provides the possibility of distributing and preventing deterioration in optic fibre cable installations, such as splicing trays in splicing boxes and optic fibre distributors, protecting the individual fibres comprising the optic fibre cables.

The optical fiber separator of the invention is described by claim 1.

More specifically, the optic fibre separator is formed by a cylindrical body of rigid plastic material, which has a wide opening on its ruling line, over which are arranged, on one of its bases, since the opposite one is totally open, at least four flexible tubes in which the fibres will be distributed, two for each tube, pertaining to the cable to which the separator is attached.

In the cylindrical body of rigid plastic material, open through its ruling line, there are four windows or openings through which the introduction or passage of the pertinent tapes is made, facilitating cable fastening, over which the separator is located.

These optic fibre separators are generally intended to be coupled to optic fibre cables.

The invention permits the use of cylinders with greater dimensions, such that it may be applied to cables of more than 8 fibres, with more than four flexible tubes.

### DESCRIPTION OF THE DRAWINGS

To complement the description being made and to permit a better understanding of the characteristics of the invention, this report is accompanied by, as an integral part thereof, a set of drawings with an illustrative and nonlimiting character, which represents the following:
Figure 1. This shows the object of the invention regarding an optic fibre separator in different views, with the purpose of appreciating its general structure.

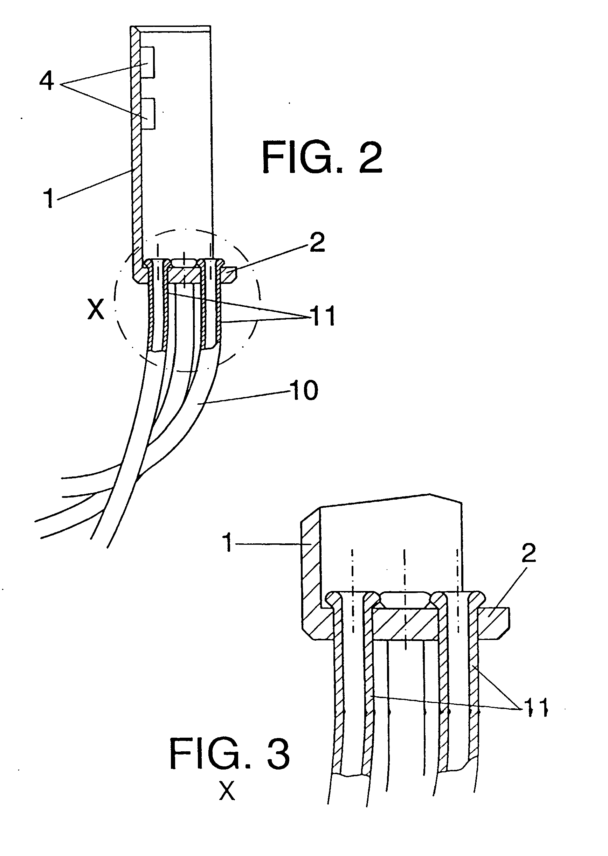

Figure 2. This represents a section view of the invention shown in Figure 1, coupled over the tubes carrying the optic fibre cables.
Figure No. 3. This corresponds to a detail of the object represented in Figure 2.

### PREFERRED EMBODIMENT OF THE INVENTION

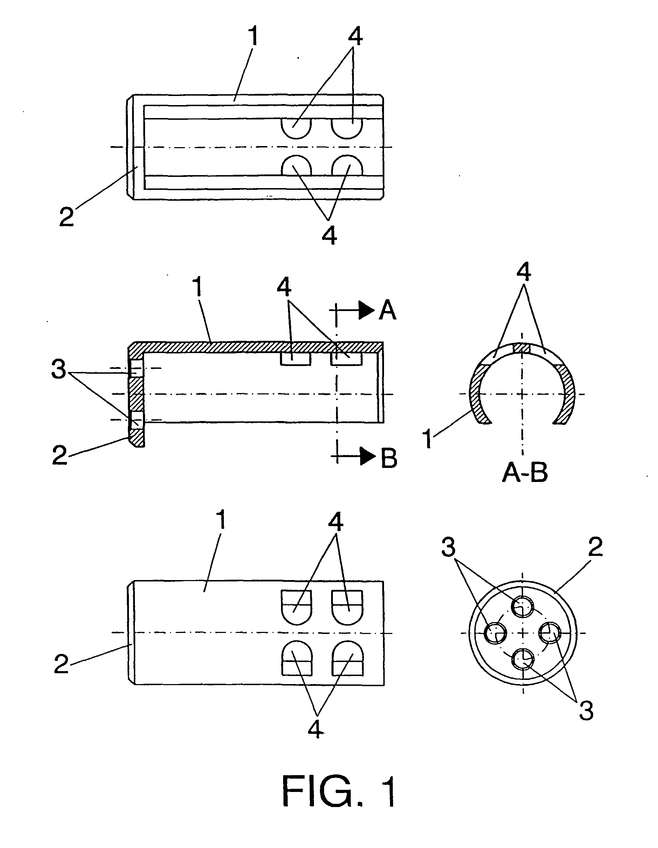

In the light of these figures and more specifically, of figure no. 1, it may be seen how the optic fibre separator is configured as a rigid plastic cylinder (1), open through its ruling line, over which are arranged, more specifically over its base (2) four flexible tubes (10) in which the fibres are distributed, two for each tube (10), of the cable to which the separator formed by the plastic body (1) is fitted.

On the cylindrical body (1), there are windows (4) permitting the passage of the tapes, facilitating cable fastening, over which the separator is located.

Over the base (2), several perforations (3) have been made for the coupling of the tubes (10) by means of the protective ends (11) of the tubes (10), which are fixed with cyanocrylate, remaining fixed to the base (2).

It should be mentioned that the plastic tubes (10) are intended to receive in their interior, the separate optic fibre pairs, the optic fibre cable being incorporated through the opposite end, which will remain fixed to the body (1) by means of the tapes to be introduced through the windows (4), consequently retaining the connection cable.

## Claims

1. Optical fibre separator, having a cylindrical body (1) made from a plastic material, and a base (2) that closes one of the ends of said cylindrical body (1), whilst the opposite end remains open; whereby said base (2) has perforations (3) through which flexible tubes (10) pass, into each of whichtwo optical fibres are inserted, said optical fibres forming part of the respective fibre-optic cable on which the optical fiber separator is fitted and fastened **characterised by** said cylindrical body (1) having a longitudinal opening along its entire length and windows (4) through which tapes pass in order to fasten said separator to the fibre-optic cable.

2. Optical fibre separator according to claim 1, **characterised in that** said base (2) includes four perforations (3), to each of which a flexible tube (10) is attached and from each of which a pair of optical fibers emerge.

## Patentansprüche

1. Lichtwellenleiter-Separator, der einen aus Kunststoff hergestellten zylinderförmigen Körper (1) und eine Grundfläche (2) besitzt, die eines der Enden des besagten zylinderförmigen Körpers (1) abdeckt, wohingegen das gegenüberliegende Ende offen bleibt; wobei die besagte Grundpfläche (2) Perforierungen (3) besitzt, durch die flexible Röhren (10) verlaufen, wobei in jede dieser Röhren zwei Lichtwellenleiter eingefügt sind, wobei die besagten Lichtwellenleiter zu dem jeweiligen Glasfaserkabel gehören, auf dem der Lichtwellenleiter-Separator angebracht und befestigt ist, **dadurch gekennzeichnet, dass** der besagte zylinderförmige Körper (1) eine längliche Öffnung über die gesamte Länge und ein Fenster (4) besitzt, durch die Tapes verlaufen, um den besagten Separator an dem Glasfaserkabel zu befestigen.

2. Ein Lichtwellenleiter-Separator nach Anspruch 1, **dadurch gekennzeichnet, dass** die besagte Grundfläche (2) vier Perforierungen (3) einschließt, wobei an jeder dieser Perforierungen eine flexible Röhre (10) befestigt ist, und wobei aus jeder einzelnen ein Paar Lichtwellenleiter heraustritt.

## Revendications

1. Séparateur de fibre optique, se composant d'un corps cylindrique (1) fabriqué dans un matériau plastique et d'une base (2) qui ferme l'une des extrémités dudit corps cylindrique (1) alors que l'extrémité opposée reste ouverte ; où ladite base (2) comporte des perforations (3) à travers lesquelles passent des tubes flexibles (10), dans chacun d'entre eux sont insérées deux fibres optiques, lesdites fibres optiques faisant partie du câble à fibre optique correspondant sur lequel le séparateur de fibre optique est ajusté et attaché **caractérisé par** ledit corps cylindrique (1) qui comporte une ouverture longitudinale sur toute sa longueur et des fenêtres (4) à travers lesquelles passent des bandes de façon à attacher ledit séparateur au câble à fibre optique.

2. Séparateur de fibre optique selon la revendication 1, **caractérisé en ce que** ladite base (2) comporte quatre perforations (3), à chacune d'entre elles est attaché un tube flexible (10) et de chacun de ces tubes émerge une paire de fibres optiques.
